# EUROPEAN PATENT APPLICATION

(11) **EP 4 776 182 A1**
(43) Date of publication of application: **15.07.2026**
(21) Application number: 24863161.6
(22) Date of filing: 03.09.2024
(51) Int. Cl.: G06K 19/07, G06K 19/077, G06V 40/13, B32B 5/26

(54) **SMART IC SUBSTRATE, SMART IC MODULE, AND IC CARD COMPRISING SAME**

(30) Priority: 04.09.2023 KR 20230117013
(71) Applicant: LG Innotek Co., Ltd., Seoul 07796 (KR)
(72) Inventor: GWON, Yong Hyon, Seoul 07796 (KR); LEE, Do Yun, Seoul 07796 (KR)
(74) Representative: DREISS Patentanwälte PartG mbB
(86) International application number: PCT/KR2024/013255
(87) International publication number: WO 2025/053580

(57) **Abstract**

A smart IC substrate according to an embodiment includes a substrate including a first surface and a second surface opposite to the first surface; and a conductive pattern part disposed on the first surface of the substrate, wherein the conductive pattern part includes a plurality of conductive patterns spaced apart from each other with a separation region therebetween, and wherein the separation region between the plurality of conductive patterns includes a first region having a first width, and a second region having a second width different from the first width.

## Description

### Technical Field

An embodiment relates to a smart IC substrate, a smart IC module, and an IC card including the same.

### Background Art

An IC card is a plastic card in which an integrated circuit chip capable of storing and processing information is embedded. In the IC card, an IC in which necessary information is stored is mounted. The information is transmitted to a reader in the form of an electrical signal.

The IC card is manufactured by inserting a smart IC module into a main body of the card.

The smart IC module is classified into a single type or a dual type according to an arrangement of a metal layer. In the single type, a metal layer and a plating layer are disposed only on one surface of a substrate. In the dual type, metal layers and plating layers are disposed on both surfaces of a substrate.

Also, the smart IC module is classified into a contact card, a contactless card, a hybrid card, and a combi card according to a usage method of the card. The contact card transmits and receives information by physical contact. The contactless card transmits and receives information without physical contact. The hybrid card and the combi card include both the contact function and the contactless function.

The IC card may include a fingerprint sensor. In detail, the IC card may include a fingerprint sensor chip. Accordingly, the IC card may include a fingerprint authentication function.

Therefore, the IC card may operate depending on whether the fingerprint is authenticated. However, it may be difficult for a user to check, from outside, whether the fingerprint is authenticated. That is, the user cannot check whether the fingerprint authentication is performed before connecting the IC card and the reader. Therefore, inconvenience to the user may increase.

Accordingly, there is a demand for a smart IC substrate, a smart IC module, and an IC card including the same, having a new structure capable of solving the above-described problems.

As prior art related to the smart IC substrate, Korean Patent Publication KR10-2022-0110247 discloses the smart IC substrate.

### Disclosure

### Technical Problem

An embodiment provides a smart IC module capable of allowing fingerprint recognition of an IC card to be easily checked.

### Technical Solution

A smart IC substrate according to an embodiment comprises a substrate including a first surface and a second surface opposite to the first surface; and a conductive pattern part disposed on the first surface of the substrate, wherein the conductive pattern part includes a plurality of conductive patterns spaced apart from each other with a separation region therebetween, and wherein the separation region between the plurality of conductive patterns includes a first region having a first width, and a second region having a second width different from the first width.

In addition, the first width is greater than the second width, and wherein a maximum width of the first region is 1.5 times to 3.5 times an average width of the second region.

In addition, a width of the second region is 180 µm to 220 µm.

In addition, the smart IC substrate further comprises a wiring pattern disposed under the second surface of the substrate, wherein the second surface includes a first mounting region in which a chip is disposed, and a second mounting region in which a light source is disposed.

In addition, wherein the wiring pattern includes a first wiring pattern connected to at least one of an antenna and a fingerprint sensor package, and a second wiring pattern connected to the light source, and wherein the second wiring pattern includes a wiring part and a pad part.

In addition, the pad part overlaps the first region in a thickness direction of the substrate.

In addition, the pad part does not overlap the first region in a thickness direction of the substrate.

In addition, the smart IC substrate further comprises a first bonding layer disposed between the first surface of the substrate and the conductive pattern part; and a second bonding layer disposed between the second surface of the substrate and the wiring pattern, wherein at least one bonding layer among the first bonding layer and the second bonding layer includes beads.

In addition, the beads include at least one of a scattering agent or colored beads.

In addition, the first width of the first region varies toward one direction.

In addition, the smart IC substrate further comprises a first metal layer disposed on the first bonding layer; a second metal layer disposed on the second bonding layer; a first plating layer disposed on one surface of the first metal layer; a second plating layer disposed on the other surface of the first metal layer; and a third plating layer disposed on one surface of the second metal layer, wherein the conductive pattern includes the first metal layer and the first plating layer, and wherein the wiring pattern includes the second metal layer and the third plating layer.

In addition, the smart IC substrate further comprises a plurality of holes penetrating the substrate, the first bonding layer, and the second bonding layer, and wherein the first metal layer and the second plating layer on the first metal layer are disposed inside the holes.

In addition, the smart IC substrate further comprises a groove or a second hole formed by removing at least one among the substrate, the first bonding layer, and the second bonding layer.

In addition, the smart IC substrate further comprises a via connecting the conductive pattern and the second wiring pattern.

In addition, the substrate includes the second hole, and the first plating layer is disposed on one surface, a side surface, and the other surface of the first metal layer.

### Advantageous Effects

The smart IC substrate according to embodiments includes a plurality of conductive patterns. In addition, light emitted from the light source passes through a separation region between the conductive patterns.

The separation region includes a first separation region and a second separation region. The first separation region includes a first region and a second region. A width of the first region is greater than a width of the second region.

A user checks whether a fingerprint is authenticated by the light emitted from the light source or a color of the light.

The light emitted from the light source passes through the first region. Accordingly, an amount of light passing through the smart IC substrate increases. Therefore, light transmittance of the smart IC substrate increases. Therefore, the user can easily check the light or the color of the light. Accordingly, the user can easily check whether the fingerprint is authenticated.

Accordingly, before connecting the IC card to a reader, the user can check whether the fingerprint authentication is performed.

### Description of Drawings

FIG. 1 is a top plan view of a first surface of a smart IC substrate according to an embodiment.
FIG. 2 is a top plan view of a second surface of the smart IC substrate according to an embodiment.
FIG. 3 is a cross-sectional view taken along region A-A' of FIG. 2.
FIG. 4 is a cross-sectional view taken along region B-B' of FIG. 2.
FIG. 5 is a cross-sectional view taken along region C-C' of FIG. 2.
FIG. 6 is an enlarged view of region D of FIG. 3.
FIGS. 7 to 10 are other cross-sectional views taken along region A-A' of FIG. 2.
FIG. 11 is a top plan view of a second surface of a smart IC module according to an embodiment.
FIGS. 12 to 16 are cross-sectional views in which a chip is mounted on the smart IC substrates of FIGS. 3 and 7 to 10.
FIG. 17 is a cross-sectional view taken along region E-E' of FIG. 11.
FIG. 18 is a cross-sectional view taken along region F-F' of FIG. 11.
FIG. 19 is an exploded perspective view of a smart IC card according to an embodiment.
FIG. 20 is a view for explaining coupling of the smart IC module according to an embodiment.

### Modes of the Invention

Hereinafter, embodiments of the present disclosure will be described in detail with reference to the accompanying drawings. However, the spirit and scope of the present disclosure is not limited to a part of the embodiments described, and may be implemented in various other forms, and within the spirit and scope of the present disclosure, one or more of the elements of the embodiments may be selectively combined and redisposed.

In addition, unless expressly otherwise defined and described, the terms used in the embodiments of the present disclosure (including technical and scientific terms) may be construed the same meaning as commonly understood by one of ordinary skill in the art to which the present disclosure belongs, and the terms such as those defined in commonly used dictionaries may be interpreted as having a meaning that is consistent with their meaning in the context of the relevant art.

In addition, the terms used in the embodiments of the present disclosure are for describing the embodiments and are not intended to limit the present disclosure. In this specification, the singular forms may also include the plural forms unless specifically stated in the phrase, and may include at least one of all combinations that may be combined in A, B, and C when described in "at least one (or more) of A (and), B, and C".

Further, in describing the elements of the embodiments of the present disclosure, the terms such as first, second, A, B, (a), and (b) may be used. These terms are only used to distinguish the elements from other elements, and the terms are not limited to the essence, order, or order of the elements.

In addition, when an element is described as being "connected", "coupled", or "contacted" to another element, it may include not only when the element is directly "connected" to, "coupled" to, or "contacted" to other elements, but also when the element is "connected", "coupled", or "contacted" by another element between the element and other elements.

In addition, when described as being formed or disposed "on (over)" or "under (below)" of each element, the "on (over)" or "under (below)" may include not only when two elements are directly connected to each other, but also when one or more other elements are formed or disposed between two elements.

Further, when expressed as "on (over)" or "under (below)", it may include not only the upper direction but also the lower direction based on one element.

Hereinafter, a smart IC substrate, a smart IC module, and a smart IC card including the same according to embodiments will be described with reference to the drawings.

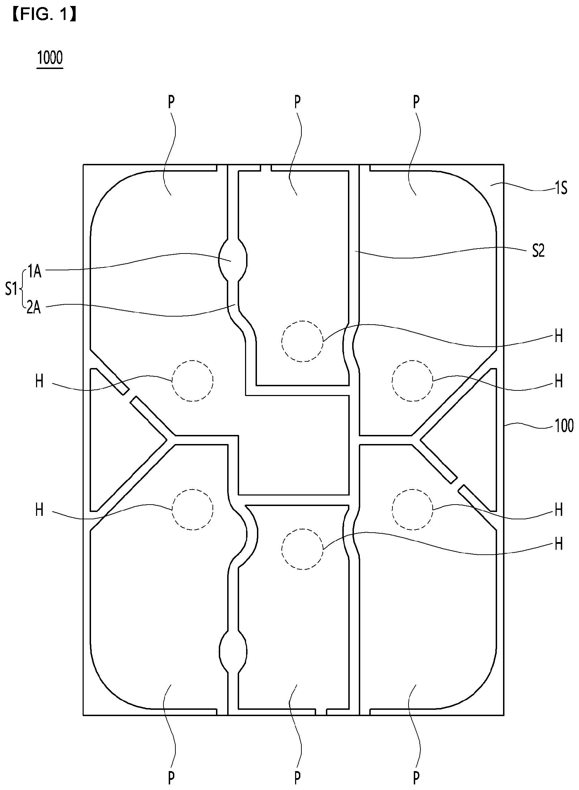

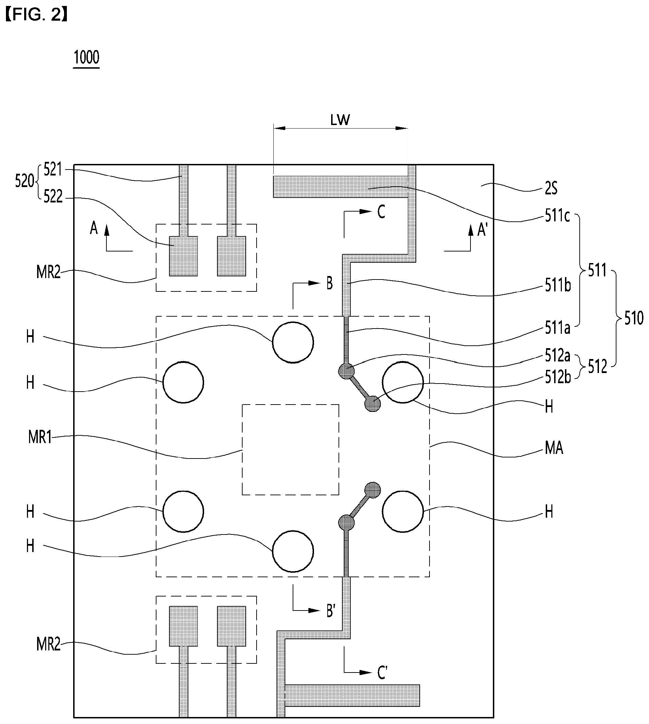

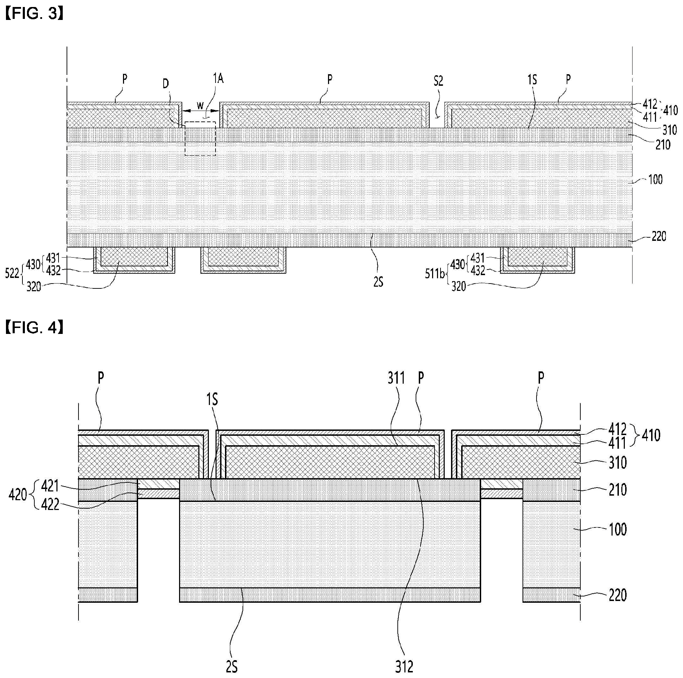

Referring to FIGS. 1 to 10, the smart IC substrate 1000 includes a substrate 100, bonding layers, metal layers, plating layers, and a wiring pattern.

The substrate 100 includes a first surface 1S and a second surface 2S. The first surface 1S and the second surface 2S are surfaces opposite to each other.

The first surface 1S is a contact surface. In detail, the first surface 1S is a surface capable of recognizing information of the smart IC module by direct or indirect contact. In addition, the second surface 2S is a bonding surface. In detail, the second surface 2S is a surface on which a chip is mounted and which is bonded to a main body of the IC card.

The substrate 100 includes a resin material. The substrate 100 may include prepreg including glass fiber. In detail, the substrate 100 may include a material in which glass fiber and a silicon-based filler Si filler are dispersed in an epoxy resin.

Alternatively, the substrate 100 may be rigid or flexible. For example, the substrate 100 may include glass or plastic. In detail, the substrate 100 may include chemically strengthened or semi-strengthened glass such as soda lime glass or aluminosilicate glass. Alternatively, the substrate 100 may include polyimide PI, polyethylene terephthalate PET, propylene glycol PPG, polycarbonate PC, or sapphire.

Alternatively, the substrate 100 may include an optically isotropic film. For example, the substrate 100 may include COC cyclic olefin copolymer, COP cyclic olefin polymer, optically isotropic polycarbonate PC, or optically isotropic polymethyl methacrylate PMMA.

Alternatively, the substrate 100 may be bendable while partially having a curved surface. That is, the substrate 100 may be bendable while partially having a planar surface and partially having a curved surface. In detail, an end of the substrate 100 may be bendable while having a curved surface. Alternatively, the substrate 100 may be bendable while having a random curvature.

The substrate 100 may have a thickness in a set range. For example, the thickness of the substrate 100 may be 80 µm to 150 µm, 90 µm to 140 µm, or 100 µm to 120 µm. If the thickness of the substrate 100 is less than 80 µm, supportability of the substrate 100 decreases. In addition, if the thickness of the substrate 100 exceeds 150 µm, a thickness of the smart IC substrate may increase. Accordingly, a size of the IC card increases.

The substrate 100 has insulating properties. Accordingly, the substrate 100 prevents shorts between circuits. In addition, the substrate 100 serves to support a circuit during a process of forming the circuit.

The substrate 100 includes a plurality of mounting regions. In detail, the second surface 2S includes a plurality of mounting regions. The mounting regions may include a first mounting region MR1 and a second mounting region MR2. The second mounting region MR2 may include at least one mounting region.

Different electronic components are disposed on the first mounting region MR1 and the second chip mounting region MR2. For example, a chip is disposed on the first mounting region MR1. In detail, a driver IC is disposed on the first mounting region MR1. In addition, at least one of a light source and MCLL is disposed on the second mounting region MR2. For example, the light source may be disposed on the second mounting region MR2. In detail, a light emitting diode LED may be disposed on the second mounting region MR2.

The second mounting region MR2 is disposed outside a molding region MA. Therefore, the light source 600 is also disposed outside the molding region MA. Accordingly, transmittance of light emitted from the light source increases.

The substrate 100 includes holes. In detail, the substrate 100 includes a plurality of holes H.

At least one hole among the plurality of holes is a region in which wire bonding is performed. For example, all of the plurality of holes are regions in which wire bonding is performed. Alternatively, some holes among the plurality of holes are regions in which wire bonding is performed. The chip C and the plating layer are wire-bonded through the holes H.

The holes H have a width in a set range. The width of the holes H may be defined as a diameter of a hole or a minimum distance between inner side surfaces of the hole. For example, the width of the holes H may be 500 µm to 1000 µm, 600 µm to 900 µm, or 700 µm to 800 µm. If the width of the holes H is less than 500 µm, wire bonding through the holes H becomes difficult. In addition, if the width of the holes H exceeds 1000 µm, supportability of the substrate 100 decreases.

The bonding layers are disposed on the substrate 100. The bonding layers include a first bonding layer 210 and a second bonding layer 220. The first bonding layer 210 is disposed on the first surface 1S. The second bonding layer 220 is disposed on the second surface 2S.

At least one bonding layer among the first bonding layer 210 and the second bonding layer 220 includes a resin material. For example, at least one bonding layer among the first bonding layer 210 and the second bonding layer 220 may include at least one of epoxy resin, acrylic resin, and polyimide resin. In addition, at least one bonding layer among the first bonding layer 210 and the second bonding layer 220 may include at least one additive among natural rubber, a plasticizer, a curing agent, and a phosphorus-based flame retardant. Accordingly, flexibility of the bonding layers 210 and 220 is improved.

The bonding layers 210 and 220 may have a thickness in a set range. For example, the thickness of the bonding layers 210 and 220 may be 15 µm to 35 µm, 20 µm to 30 µm, or 22 µm to 28 µm. If the thickness of the bonding layers 210 and 220 is less than 15 µm, adhesive strength of the bonding layers decreases. Accordingly, the metal layers on the bonding layers may peel off. In addition, if the thickness of the bonding layers 210 and 220 exceeds 35 µm, the thickness of the smart IC substrate may increase. Accordingly, the size of the IC card increases.

The metal layers are disposed on the substrate 100. The metal layers include a first metal layer 310 and a second metal layer 320. The first metal layer 310 is disposed on the first surface 1S. The first metal layer 310 is disposed on the first bonding layer 210. The second metal layer 320 is disposed on the second surface 2S. The second metal layer 320 is disposed on the second bonding layer 220.

The metal layers 310 and 320 include a metal material. For example, the metal layers 310 and 320 may include at least one material among gold Au, silver Ag, platinum Pt, titanium Ti, tin Sn, copper Cu, and zinc Zn. Preferably, the metal layers 310 and 320 include copper.

The metal layers 310 and 320 may have a thickness in a set range. For example, the thickness of the metal layers 310 and 320 may be 30 µm to 75 µm, 40 µm to 65 µm, or 50 µm to 60 µm. If the thickness of the metal layers 310 and 320 is less than 30 µm, resistance of the metal layers 310 and 320 increases. In addition, if the thickness of the metal layers 310 and 320 exceeds 75 µm, the thickness of the smart IC substrate may increase. Accordingly, the size of the IC card increases. In addition, process efficiency may decrease.

The first metal layer 310 includes a plurality of conductive patterns P. The conductive patterns P are formed by patterning the first metal layer 310. The holes H are disposed on at least one conductive pattern among the conductive patterns P.

The conductive patterns P are disposed on the first surface 1S. The conductive patterns P are disposed on the first bonding layer 210. The conductive patterns P are disposed on the contact surface.

Accordingly, the conductive patterns P are spaced apart from each other. For example, the conductive patterns are spaced apart by separation regions S1 and S2.

The plating layers are disposed on the metal layers. The plating layers are classified into a plurality of plating layers according to positions. In detail, the plating layers may include a first plating layer 410, a second plating layer 420, and a third plating layer 430 disposed at different positions.

The first plating layer 410 is disposed on one surface 311 of the first metal layer 310. The conductive pattern P is formed by the first metal layer 310 and the first plating layer 410. The second plating layer 420 is disposed on the other surface 312 of the first metal layer 310. The second plating layer 420 is disposed in a region overlapping the holes H. The second plating layer 420 may be a first pad part to which a wire is bonded. The third plating layer 430 is disposed on one surface 321 of the second metal layer 320. The wiring pattern is formed by the second metal layer 320 and the third plating layer 430.

The first plating layer 410 includes a first-first layer 411 and a first-second layer 412. The first-first layer 411 is in contact with the first metal layer 310. The first-second layer 412 is in contact with the first-first layer 411. Accordingly, the first-first layer 411 is disposed between the first metal layer 310 and the first-second layer 412.

Meanwhile, although not shown in the drawings, an organic coating layer may be disposed on the first-second layer 412. The organic coating layer protects the first-second layer 412. Accordingly, corrosion of the first-second layer 412 may be prevented.

The second plating layer 420 includes a second-first layer 421 and a second-second layer 422. The second-first layer 421 is in contact with the first metal layer 310. The second-second layer 422 is in contact with the second-first layer 421. Accordingly, the second-first layer 421 is disposed between the first metal layer 310 and the second-second layer 422.

The third plating layer 430 includes a third-first layer 431 and a third-second layer 432. The third-first layer 441 is in contact with the second metal layer 320. The third-second layer 432 is in contact with the third-first layer 431. Accordingly, the third-first layer 431 is disposed between the second metal layer 320 and the third-second layer 432.

The first-first layer 411, the second-first layer 421, and the third-first layer 431 may include the same material. In detail, the first-first layer 411, the second-first layer 421, and the third-first layer 431 may include the same metal. For example, the first-first layer 411, the second-first layer 421, and the third-first layer 431 may include nickel.

The first-second layer 412, the second-second layer 422, and the third-second layer 423 may include the same material. In detail, the first-second layer 412, the second-second layer 422, and the third-second layer 423 may include the same metal. For example, the first-second layer 412, the second-second layer 422, and the third-second layer 423 may include gold Au or palladium Pd.

The plating layers may have different sizes. For example, thicknesses of the first plating layer 410 and the third plating layer 430 may be different from a thickness of the second plating layer 420.

In detail, a thickness of the second plating layer 410 is greater than thicknesses of the first plating layer 410 and the third plating layer 430. Thicknesses of the first-first layer 411 and the third-first layer 431 may be different from a thickness of the second-first layer 421. In detail, the thicknesses of the first-first layer 411 and the third-first layer 431 may be less than the thickness of the second-first layer 421. In addition, thicknesses of the first-second layer 412 and the third-second layer 432 may be different from a thickness of the second-second layer 422. In detail, the thicknesses of the first-second layer 412 and the third-second layer 432 may be less than the thickness of the second-second layer 422. Accordingly, the thickness of the second plating layer 420 is greater than the thicknesses of the first plating layer 410 and the third plating layer 430.

The wiring pattern is disposed on the second surface 2S. The wiring pattern is disposed on the second bonding layer 220. The wiring pattern is disposed on the bonding surface. The wiring pattern 500 is formed by the second metal layer 320 and the third plating layer 430.

The wiring pattern may include a first wiring pattern 510 and a second wiring pattern 520.

The IC card includes at least one of an antenna and a fingerprint sensor package. The first wiring pattern 510 may be connected to the fingerprint sensor package. Accordingly, the IC card can recognize a fingerprint. Alternatively, the first wiring pattern 510 is connected to the antenna and the fingerprint sensor package. Accordingly, the IC card can be driven in a contactless manner.

The first wiring pattern 510 may include a first wiring part 511 and a connection part 512.

The first wiring part 511 may include a 1a wiring part 511a, a 1b wiring part 511b, and a 1c wiring part 511c. The 1a wiring part 511a and the connection part 512 are disposed inside the molding region MA. The 1b wiring part 511b and the 1c wiring part 511c are disposed outside the molding region MA.

The 1a wiring part 511a and the 1c wiring part 511c may be connected by the 1b wiring part 511b.

The 1a wiring part 511a, the 1b wiring part 511b, and the 1c wiring part 511c may have different line widths. For example, a line width of the 1b wiring part 511b may be greater than a line width of the 1a wiring part 511a. Accordingly, after a molding part M is disposed inside the molding region MA, damage to a wiring part disposed outside the molding part M may be prevented.

The 1c wiring part 511c may be a first-first pad part connected to a pad part of the antenna or the fingerprint sensor package.

A line width of the 1c wiring part 511c may be greater than line widths of the 1a wiring part 511a and the 1b wiring part 511b. The 1c wiring part 511c is a region connected to the antenna and/or the fingerprint sensor package. For example, a line width LW of the 1c wiring part 511c may be 2500 µm or more. In detail, the line width LW of the 1c wiring part 511c may be 2500 µm to 3500 µm, 2700 µm to 3450 µm, or 3000 µm to 3400 µm. Accordingly, the first wiring pattern 510 can be easily connected to the pad part of the antenna or the fingerprint sensor package.

The connection part 512 may include a first connection part 512a and a second connection part 512b. In detail, at least one wiring pattern among a plurality of wiring patterns may include the first connection part 512a and the second connection part 512b.

Sizes of the first connection part 512a and the second connection part 512b may be smaller than a size of the holes H. In addition, a size of the second connection part 512b may be smaller than a size of the 1c wiring part 511c. For example, an area of the second connection part 512b may be smaller than an area of the 1c wiring part 511c. Accordingly, a space of the first mounting region MR1 can be widely secured, and a packaging size can be reduced.

Also, the first connection part 512a or the second connection part 512b is wire-bonded with the chip. That is, the connection part 512 may be a first-second pad part bonded with the wire. The connection part 512 includes two or more connection parts. Therefore, when wire bonding has a problem in one connection part, a wire can be bonded to another connection part. For example, when a problem occurs in wire bonding of the first connection part 512a, an additional wire can be bonded to the second connection part 512b.

The IC card includes a light source 600. For example, the IC card includes a light emitting diode. The second wiring pattern 520 may be connected to the light source 600. Accordingly, the IC card can emit light.

The second wiring pattern 520 may include a second wiring part 521 and a second pad part 522.

The second wiring part 521 is disposed inside and outside the second mounting region MR2. The second pad part 522 is disposed inside the second mounting region MR2.

A line width of the second wiring part 522 may be equal to a line width of the 1a wiring part 511a or the 1b wiring part 511b.

The second pad part 522 may be connected to a terminal of the light source 600.

The smart IC module 2000 includes a light source 600.

The light source 600 is disposed on the second surface 2S. The light source 600 is disposed on the second bonding layer 220. The light source 600 is disposed on the third circuit pattern 430. In detail, the light source 600 is disposed on the second pad part 522. A terminal of the light source 600 is electrically bonded to the second pad part 522 by solder.

The light source 600 emits light in a direction of the first surface 1S. The light moves to the outside of the smart IC substrate 1000 through the separation region. Therefore, a user can recognize the light from outside.

The light source 600 is disposed outside the molding region MA. Accordingly, light transmittance of the IC card increases.

A user checks whether a fingerprint is normally authenticated by the light source 600. For example, when the fingerprint of the user is normally authenticated, light is emitted from the light source. In addition, when the fingerprint of the user is not normally authenticated, light is not emitted from the light source.

Alternatively, when the fingerprint of the user is normally authenticated, light of a first color is emitted from the light source. In addition, when the fingerprint of the user is not normally authenticated, light of a second color is emitted from the light source.

Therefore, before connecting the IC card to a reader, a user can check whether the fingerprint is authenticated, and therefore convenience of the user increases.

When light transmittance of the IC card is small, a user cannot easily recognize presence/absence of light or a color of light. Accordingly, by controlling a size of the separation region of the smart IC substrate, the above problem is solved.

The conductive patterns P are spaced apart by the separation regions. The separation regions include a plurality of separation regions. For example, the separation regions may include a first separation region S1 and a second separation region S2. In detail, the separation regions include at least one first separation region.

The first separation region S1 includes a region in which a width changes. Accordingly, the first separation region S1 may be divided into a first region 1A and a second region 2A by a size of the width. The first separation region S1 includes at least one first region 1A. A width of the first region 1A is greater than a width of the second region 2A.

The second separation region S2 does not include a region in which a width changes. A width of the second separation region 2A may be equal or similar to a width of the second region 2A.

Light emitted from the light source 600 may pass through at least one among the first region 1A and the second region 2A. For example, the light may pass through the first region 1A. Alternatively, the light may pass through the first region 1A and the second region 2A. The light passes through the first region 1A more. For example, most of the light passes through the first region 1A.

A maximum width W of the first region 1A may be 1.5 times or more of an average width of the second region 2A. In detail, the maximum width of the first region 1A may be 1.5 times to 3.5 times, 1.7 times to 2.5 times, or 1.9 times to 2.1 times of the average width of the second region 2A.

If the maximum width of the first region 1A is less than 1.5 times the average width of the second region 2A, an amount of light passing through the first separation region S1 decreases. Accordingly, a user cannot easily recognize the light. In addition, if the maximum width of the first region 1A exceeds 3.5 times the average width of the second region 2A, an area of the conductive pattern P decreases. Accordingly, contact characteristics of a contact portion of the IC card may decrease. In addition, impurities may be introduced through the first region 1A.

As an example, the width of the second region 2A may be 180 µm to 220 µm, and the width of the first region 1A satisfies the above conditions.

A movement path of the light emitted from the light source 600 overlaps the first region 1A. Accordingly, an amount of light passing through the first separation region S1 may increase.

That is, the light source 600 overlaps or does not overlap the first region 1A, and the movement path of the light overlaps or mostly overlaps the first region 1A.

The smart IC substrate according to embodiments includes a plurality of conductive patterns. In addition, the light emitted from the light source passes through the separation region between the conductive patterns.

The separation region includes a first separation region and a second separation region. The first separation region includes a first region and a second region. A width of the first region is greater than a width of the second region.

A user checks whether a fingerprint is authenticated by the light emitted from the light source or a color of the light.

The light emitted from the light source passes through the first region. Accordingly, an amount of light passing through the smart IC substrate increases. Therefore, light transmittance of the smart IC substrate increases. Therefore, the user can easily check the light or the color of the light. Accordingly, the user can easily check whether the fingerprint is authenticated.

Accordingly, before connecting the IC card to a reader, the user can check whether the fingerprint authentication is performed.

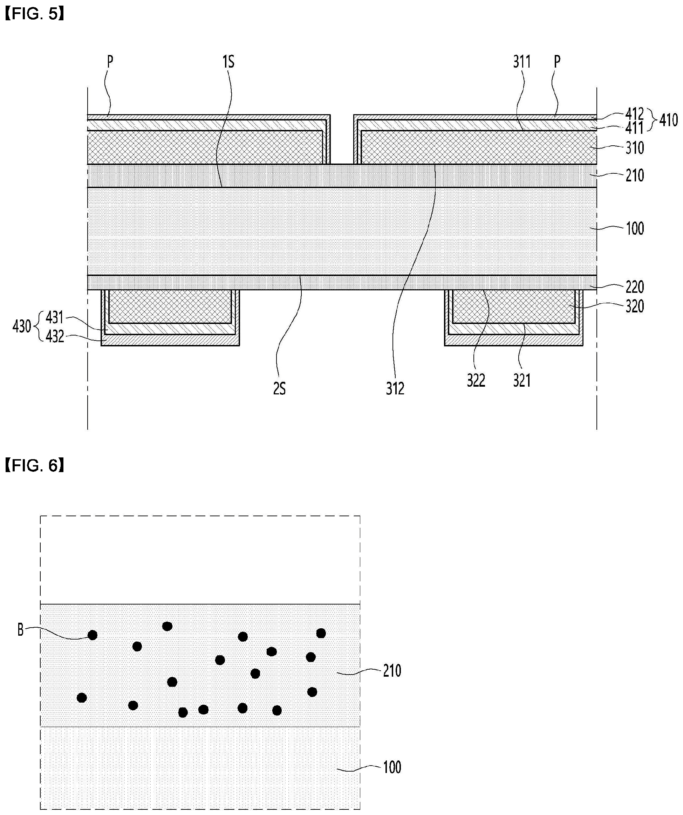

Referring to FIG. 6, at least one among the first bonding layer 210 and the second bonding layer 220 may include beads B.

The beads B may be a scattering agent. Accordingly, the light emitted from the light source 600 may be scattered by the beads B. Therefore, an amount of light passing through the first separation region S1 may increase. Accordingly, the user can easily recognize the light.

Alternatively, the beads B may be colored beads. Accordingly, the light emitted from the light source 600 may pass through the first separation region S1 in various colors by the beads B. Accordingly, the user can recognize light of various colors. In addition, the light may pass in a color suitable for a design of a main body of the card. Therefore, the user can easily recognize the light.

Alternatively, the beads B may include at least one of a scattering agent or colored beads.

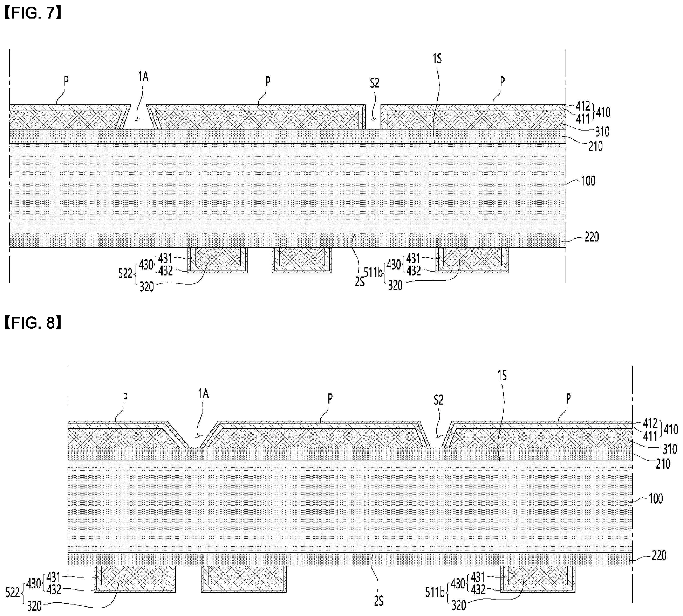

Referring to FIGS. 7 and 8, the first region 1A may have various widths.

The width of the first region 1A may change while extending from a lower portion to an upper portion.

Referring to FIG. 7, the width of the first region 1A may decrease while extending from the lower portion to the upper portion. Therefore, the first region 1A has a maximum width at the lower portion and has a minimum width at the upper portion. The minimum width may be equal or similar to a width of the second separation region S2.

Since the first region 1A has the maximum width at the lower portion, an amount of light passing through the first region 1A may increase. Accordingly, luminance of the light may increase. Therefore, the user can easily recognize the light. In addition, since the first region 1A has the minimum width at the upper portion, a spacing between conductive patterns may become uniform. Therefore, aesthetics of the IC card are improved. In addition, it is possible to prevent impurities from being introduced through the first region 1A.

Alternatively, the second pad part 522 may not overlap the first separation region S1. In addition, the light source 600 may not overlap the first separation region S1. The light source 600 may emit light laterally. Accordingly, the light emitted from the light source may evenly pass through the first region 1A and the second region 2A. Therefore, since an area through which light is transmitted increases, the user can easily recognize the light even at a long distance.

Referring to FIG. 8, the width of the first region 1A may increase while extending from the lower portion toward an upper direction. Therefore, the first region 1A has a minimum width at the lower portion and has a maximum width at the upper portion. In addition, a width of the second separation region S2 may increase while extending from the lower portion toward the upper direction. Therefore, the second separation region S2 has a minimum width at the lower portion and has a maximum width at the upper portion.

An inclination angle of the first region 1A may be different from an inclination angle of the second separation region S2. In detail, the inclination angle of the first region 1A may be greater than the inclination angle of the second separation region S2.

The minimum width of the first region 1A may be equal or similar to the maximum width of the second separation region S2.

Since the first region 1A has the maximum width at the upper portion, an area of light passing through the first region 1A may increase. Accordingly, the user can easily recognize the light. In addition, since the first region 1A has the minimum width at the lower portion, an area of the conductive pattern may increase. Accordingly, electrical characteristics of the conductive pattern may be improved. Therefore, driving characteristics of the IC card may be improved.

The second pad part 522 may overlap the first separation region S1. The second pad part 522 may entirely or partially overlap the first region 1A. In addition, the light source 600 may entirely or partially overlap the first region 1A. In addition, the light source 600 may emit light upward. Accordingly, most light passes through the first region 1A. Therefore, since luminance of light increases, the user can easily recognize the light even in a dark environment.

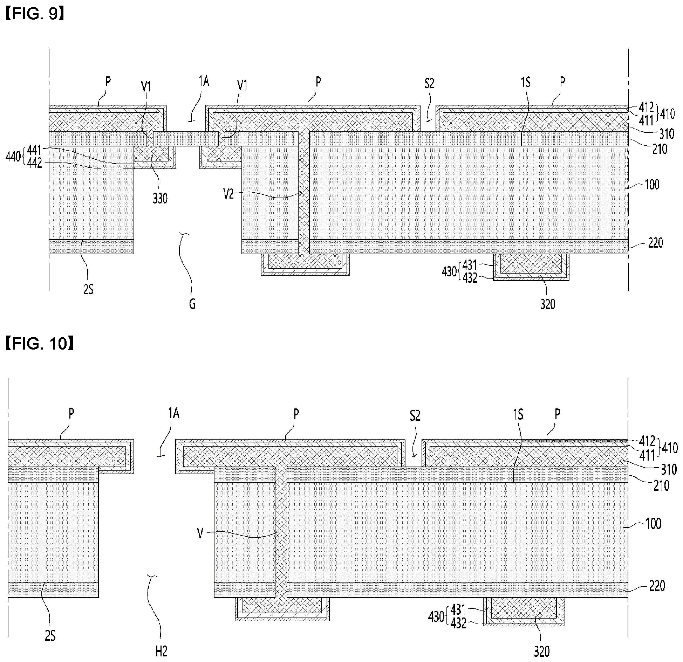

Referring to FIGS. 9 and 10, the smart IC substrate may include a groove G or a second hole H2. The groove G and the second hole H2 overlap the first separation region S1 in the thickness direction of the substrate. The groove G and the second hole H2 overlap the first region 1A.

The groove G may be formed by removing at least one among the substrate 100, the first bonding layer 210, and the second bonding layer 220.

Referring to FIG. 9, the groove G is formed by removing the second bonding layer 220 and the substrate 100. The first bonding layer 510 may be exposed by the groove G.

The light source 600 may be accommodated inside the groove G. Therefore, the groove G may be equal to or greater than a size of the light source 600.

A third metal layer 330 and a fourth plating layer 440 may be disposed inside the groove G. The third metal layer 330 includes the same material as the first metal layer 310 or the second metal layer 320. The fourth plating layer includes a fourth-first plating layer 441 and a fourth-second plating layer 442. The fourth-first plating layer 441 includes the same material as the first-first plating layer, the second-first plating layer, and the third-first plating layer. In addition, the fourth-second plating layer 442 includes the same material as the first-second plating layer, the second-second plating layer, and the third-second plating layer.

The light source 600 is disposed on the fourth-second plating layer 422. In detail, a terminal of the light source 600 is bonded to the fourth-second plating layer 422 by solder. That is, the third metal layer 330 and the fourth plating layer 440 may be a pad part connected to the light source 600.

The third metal layer 330 is connected to the first metal layer 310 by a first via V1. In addition, the first metal layer 310 is connected to the second metal layer 320 by a second via V2. Therefore, the conductive pattern P and the second wiring pattern 520 are connected by the second via.

Accordingly, the light source 600 is connected to an external power supply by the third metal layer 320.

Referring to FIG. 10, the second hole H2 is formed by removing the second bonding layer 220, the substrate 100, and the first bonding layer 210. The first metal layer 310 may be exposed by the second hole H2.

The light source 600 may be accommodated inside the groove G. Therefore, the groove G may be equal to or greater than the size of the light source 600.

The first plating layer 410 extends to the other surface 312 of the first metal layer by the second hole H2. The light source 600 is disposed on the first-second plating layer 412. In detail, the terminal of the light source 600 is bonded to the first-second plating layer 412 by solder.

The first metal layer 310 is connected to the second metal layer 320 by the second via V2.

Accordingly, the light source 600 is connected to an external power supply by the second wiring pattern 520.

The light source 600 is disposed inside the groove or the hole. Accordingly, it is possible to prevent the thickness of the smart IC substrate from increasing by the light source 600. In addition, the light source 600 is disposed adjacent to the first separation region S1. Therefore, transmittance of the light increases. Therefore, the user can easily recognize the light.

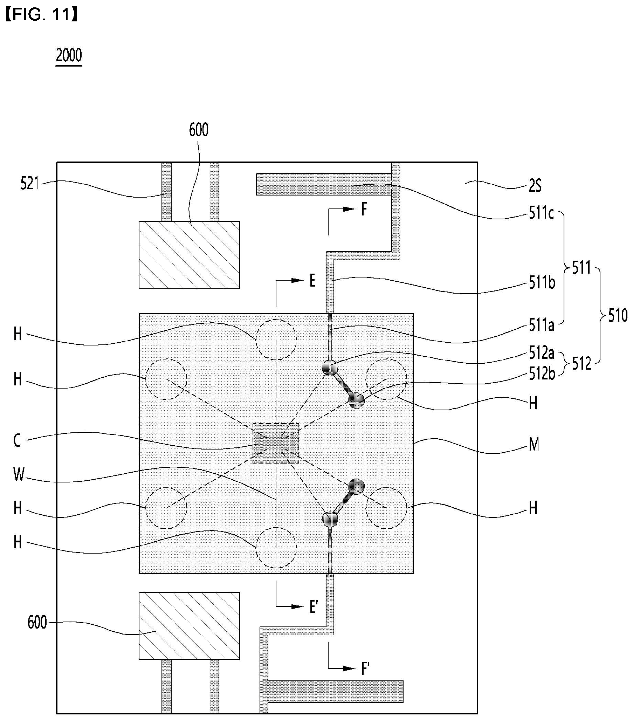

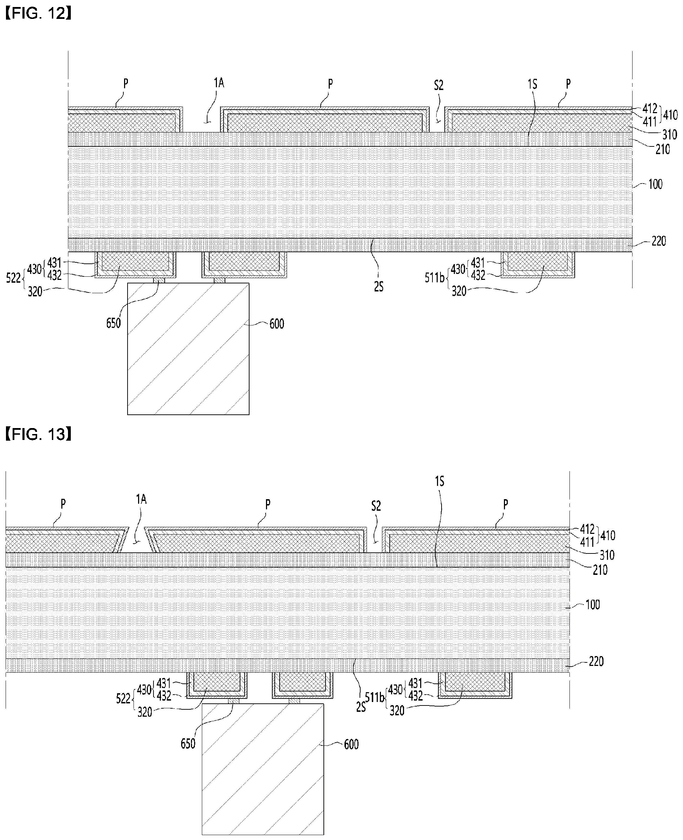

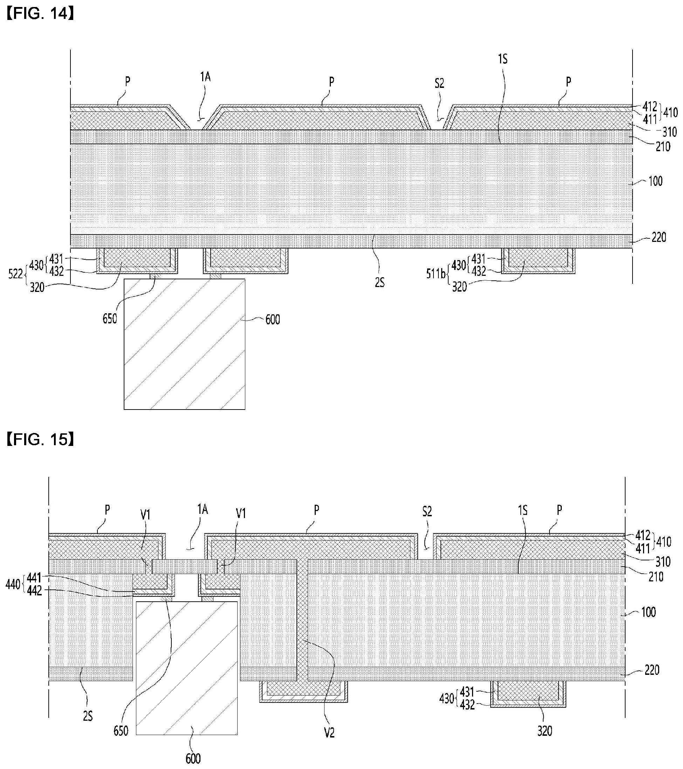

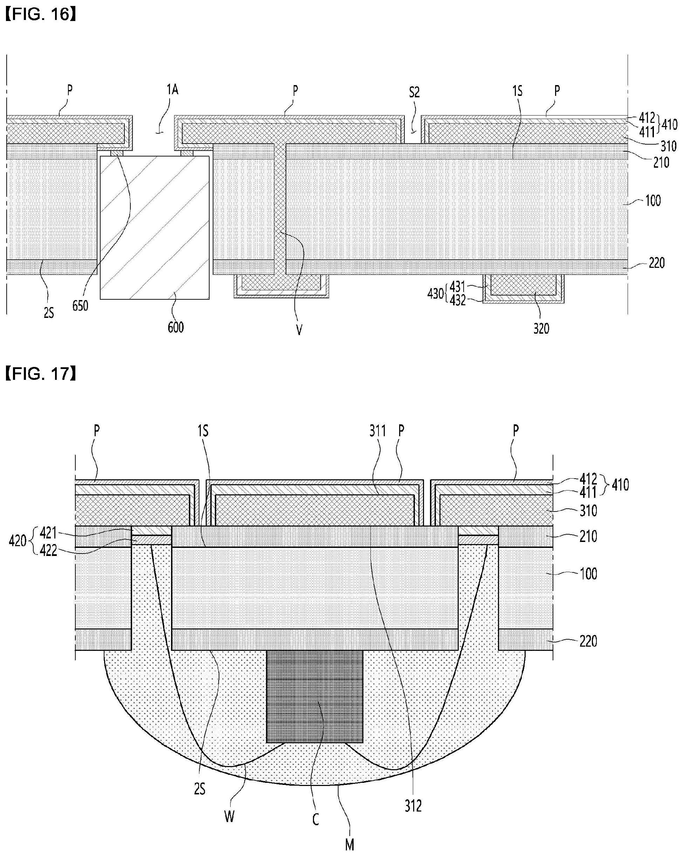

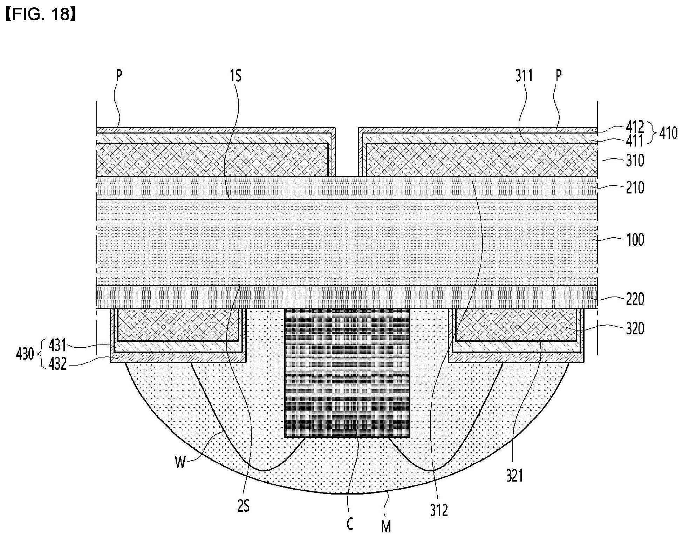

Hereinafter, a smart IC module according to embodiments will be described with reference to FIGS. 11 to 18.

Referring to FIGS. 11 to 18, the smart IC module 2000 includes the smart IC substrate 1000, a chip C, and a light source 600.

The chip C may include a driver IC. The chip C is disposed on the first mounting region MR1.

The chip C is connected to the second plating layer 420 and the third plating layer 430. In detail, the chip C and the second plating layer 430 are bonded by a wire W. Accordingly, the chip C and the conductive patterns P are electrically connected. In addition, the chip C and the third plating layer 430 are bonded by the wire W. Accordingly, the chip C and the antenna and the fingerprint sensor package are electrically connected.

A molding member M is disposed on the chip C. The molding member M is disposed while covering the chip C and the wire W. Accordingly, it is possible to prevent the wire from being damaged by an external impact.

The light source 600 is disposed on the second mounting region MR2. Alternatively, the light source 600 is disposed inside the groove G or the second hole H2.

A terminal 650 of the light source is connected to the third plating layer 430. In detail, the terminal 650 is bonded to the second pad part 522 by solder.

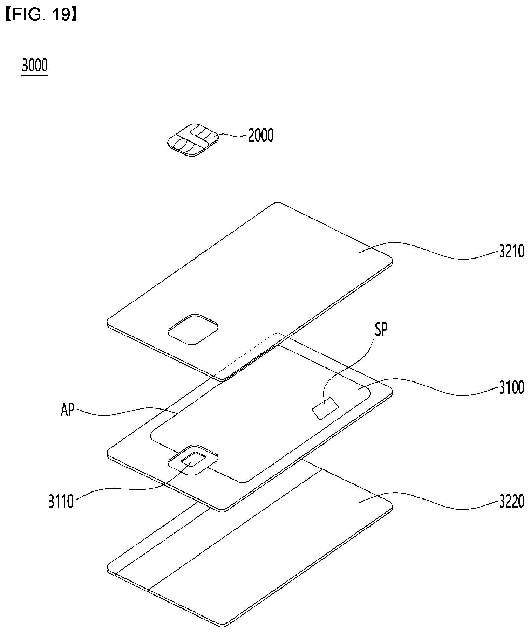

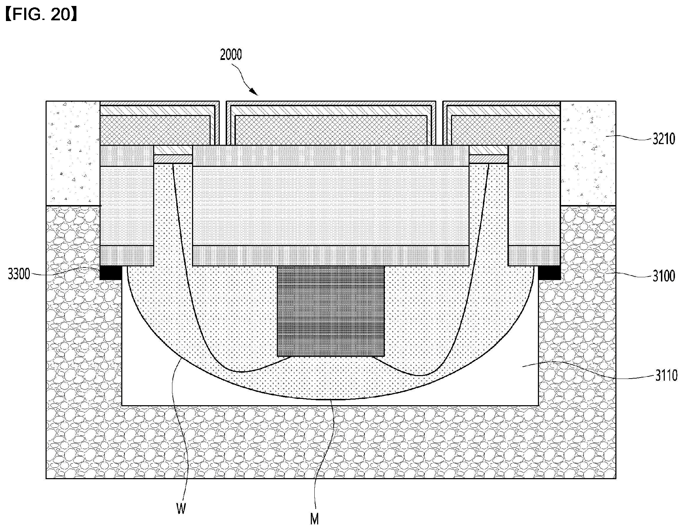

Hereinafter, an IC card according to embodiments will be described with reference to FIGS. 19 and 20.

Referring to FIGS. 19 and 20, the IC card 3000 may include a main body 3100, an upper layer 3210, and a lower layer 3220.

The main body 3100 includes an accommodation part 3110. The smart IC module 2000 is disposed inside the accommodation part 3110.

The IC card can be driven in various modes. For example, the IC card can be driven as a contact card.

Alternatively, an antenna pattern AP may be disposed on the main body 3100. In detail, the antenna pattern may be disposed in a coil shape at an edge of the main body 3100. Accordingly, the IC card can be driven as a contactless card, a combi card, or a hybrid card.

Also, a fingerprint sensor package SP is disposed on the main body. The fingerprint sensor package is connected to the smart IC module 2000.

The smart IC module 2000 is inserted into the accommodation part 3110. The smart IC module 2000 and the main body 3100 are bonded by an adhesive layer 3300. Accordingly, the smart IC module 2000 is inserted and fixed in the accommodation part 3110.

The upper layer 3210 is disposed on an upper portion of the main body 3100. The upper layer 3210 may include a transparent material. The upper layer 3210 may include a transparent resin material. The upper layer 3210 may be disposed as at least one layer. That is, the upper layer 3210 may include a plurality of layers.

The lower layer 3220 is disposed on a lower portion of the main body 3100. A magnetic stripe may be disposed on the lower layer 3220. The lower layer 3220 may include a transparent material. The lower layer 3220 may include a transparent resin material. The lower layer 3220 may be disposed as at least one layer. That is, the lower layer 3220 may include a plurality of layers.

The characteristics, structures and effects described in the embodiments above are included in at least one embodiment but are not limited to one embodiment. Furthermore, the characteristics, structures, and effects and the like illustrated in each of the embodiments may be combined or modified even with respect to other embodiments by those of ordinary skill in the art to which the embodiments pertain. Thus, it should be construed that contents related to such a combination and such a modification are included in the scope of the embodiment.

The description has been focused on the embodiment, but it is merely illustrative and does not limit the embodiment. A person skilled in the art to which the embodiment pertains may appreciate that various modifications and applications not illustrated above are possible without departing from the essential features of the embodiment. For example, each component particularly represented in the embodiment may be modified and implemented. In addition, it should be construed that differences related to such changes and applications are included in the scope of the embodiment defined in the appended claims.

## Claims

1. A smart IC substrate comprising:
a substrate including a first surface and a second surface opposite to the first surface; and
a conductive pattern part disposed on the first surface of the substrate,
wherein the conductive pattern part includes a plurality of conductive patterns spaced apart from each other with a separation region therebetween, and
wherein the separation region between the plurality of conductive patterns includes a first region having a first width, and a second region having a second width different from the first width.

2. The smart IC substrate of claim 1, wherein the first width is greater than the second width, and
wherein a maximum width of the first region is 1.5 times to 3.5 times an average width of the second region.

3. The smart IC substrate of claim 1, wherein a width of the second region is 180 µm to 220 µm.

4. The smart IC substrate of claim 1, further comprising:
a wiring pattern disposed under the second surface of the substrate,
wherein the second surface includes a first mounting region in which a chip is disposed, and a second mounting region in which a light source is disposed.

5. The smart IC substrate of claim 4, wherein the wiring pattern includes a first wiring pattern connected to at least one of an antenna and a fingerprint sensor package, and a second wiring pattern connected to the light source, and
wherein the second wiring pattern includes a wiring part and a pad part.

6. The smart IC substrate of claim 5, wherein the pad part overlaps the first region in a thickness direction of the substrate.

7. The smart IC substrate of claim 5, wherein the pad part does not overlap the first region in a thickness direction of the substrate.

8. The smart IC substrate of claim 4, further comprising:
a first bonding layer disposed between the first surface of the substrate and the conductive pattern part; and
a second bonding layer disposed between the second surface of the substrate and the wiring pattern,
wherein at least one bonding layer among the first bonding layer and the second bonding layer includes beads.

9. The smart IC substrate of claim 8, wherein the beads include at least one of a scattering agent or colored beads.

10. The smart IC substrate of claim 1, wherein the first width of the first region varies toward one direction.
